Europäisches Patentamt

European Patent Office

Office européen des brevets

(11) Veröffentlichungsnummer: **0 183 678**
**B1**

(12) **EUROPÄISCHE PATENTSCHRIFT**

(45) Veröffentlichungstag der Patentschrift: 23.01.91

(21) Anmeldenummer: 85890284.4

(22) Anmeldetag: 18.11.85

(51) Int. Cl.⁵: **C 13 J 1/00, C 13 K 3/00,**
**C 13 K 1/10, C 12 F 3/00**

(54) **Verfahren zur Aufarbeitung von Melasse oder Melasseschlempe sowie Anlage zur Durchführung des Verfahrens.**

(30) Priorität: 26.11.84 AT 3731/84

(43) Veröffentlichungstag der Anmeldung:
04.06.86 Patentblatt 86/23

(45) Bekanntmachung des Hinweises auf die
Patenterteilung:
23.01.91 Patentblatt 91/04

(84) Benannte Vertragsstaaten:
BE CH DE FR GB IT LI NL SE

(56) Entgegenhaltungen:
DE-C- 860 737
DE-C- 956 570
FR-A-2 511 700
GB-A-2 030 127

(73) Patentinhaber: **VOGELBUSCH GESELLSCHAFT m.b.H.**
**Blechturmgasse 11**
**A-1050 Wien (AT)**

(72) Erfinder: **Eder, Karl, Dipl.-Ing.**
**Haymogasse 86**
**A-1238 Wien (AT)**

(74) Vertreter: **Wolfram, Gustav, Dipl.-Ing.**
**Schwindgasse 7 P.O. Box 205**
**A-1041 Wien (AT)**

**Beschreibung**

Die Erfindung betrifft ein Verfahren zur Aufarbeitung von Melasse oder Melasseschlempe sowie eine Anlage zur Durchführung des Verfahrens.

Melasse fällt als Restprodukt bei der Zuckerfabrikation aus Zuckerrüben oder -rohr an. Sie enthält 15 bis 25% Wasser, 40 bis 55% Zucker und 4 bis 10% Oxidasche. Der Rest besteht aus nicht vergärbaren organischen Substanzen mit einem Stickstoffgehalt von durchschnittlich 1,6%. Diese organischen Nichtzuckerstoffe sind u.a. Dextrin, Milchsäure, Betain, Asparagin, Glutaminsäure, Leucin und Hydantoin.

Nach Vergären der in Melasse enthaltenen Zucker und Gewinnung des gebildeten Äthanols bleibt die Melasseschlempe zurück.

Ein großes Hindernis bei der Weiterverarbeitung von Melasse und Schlempe sind die enthaltenen anorganischen Substanzen, wie Salze von Alkali- und Erdalkalimetallen.

Sollen beispielsweise aus Schlempe Futtermittel hergestellt werden, so ist der hohe Kaliumgehalt der Schlempe besonders störend, da der Elektrolythaushalt in den Tieren durch Verabreichung größerer Mengen unbehandelter Schlempe oder daraus erzeugten Futtermitteln erheblich aus dem Gleichgewicht gebracht würde.

Auch bei der Erzeugung von Zuckerprodukten sowie bei der Alkohol- und Hefefabrikation aus Melasse üben die anorganischen Verunreinigungen einen sehr ungünstigen Einfluß aus.

Ein möglichst niedriger Kaliumgehalt ist weiters eine Vorbedingung für die Zitronensäureherstellung aus Melasse mittels Mikroorganismen.

Selbst wenn eingedickte Schlempe lediglich in herkömmlichen Brennern verbrannt werden soll, ist ein hoher Gehalt an anorganischen Substanzen sehr nachteilig, da diese Substanzen zu erheblicher Verkrustung der Brenner führen. Selbst in eigens zu diesem Zweck entwickelten Kesselanlagen führt der hohe Salzgehalt zu erheblichen Störungen und Zerstörungen innerhalb der Kesselanlage. Zur Abscheidung der im wesentlichen anorganische Salze enthaltenden Flugasche sind teure Abscheidevorrichtungen, z.B. Elektrofilter, zwingend vorgeschrieben.

Bei der Herstellung von Futtermitteln aus Schlempe wurde gemäß der DE—C—860 737 bereits vorgeschlagen, den Gehalt der Schlempe an Kaliumionen durch Zusatz von Salzsäure, Ammoniumchlorid oder Weinsäure und anschließendes Filtrieren zu erniedrigen.

Nach der DE—C—29 37 551 wird zu diesem Zweck eine Säure, die wenig lösliche Kaliumsalze bildet, in Gegenwart von Äthanol, Propanol, Isopropanol, Aceton, Methyläthylketon, Methyl- oder Äthylacetat zugesetzt. Die ausgefällten Salze werden abgetrennt und die Lösungsmittel destillativ rückgewonnen.

Abgesehen davon, daß diese bekannten Verfahren nur für Schlempe anwendbar sind, ist auch der erzielbare Reinigungsgrad unbefriedigend.

Darüber hinaus ist es nach der DE—C—860 737 praktisch unumgänglich, die Schlempe zu neutralisieren, so daß wieder Salze entstehen. Die zur Rückgewinnung der Lösungsmittel gemäß der DE—C—29 37 551 vorzunehmende Destillation ist sehr energieaufwendig. Da sämtliche angeführten Lösungsmittel mit Wasser ein Azeotrop bilden, ist zudem ihre Reingewinnung auf destillativem Wege nicht möglich.

Die Erfindung stellt sich die Aufgabe, die mit der Reinigung von Schlempe bisher verbundenen Unzulänglichkeiten zu überwinden und ein Aufarbeitungsverfahren zu schaffen, welches nicht nur eine wirtschaftlichere und effektivere Reinigung von Schlempe, sondern auch von Melasse ermöglicht und darüber hinaus eine einfache und betriebssichere Gewinnung der enthaltenen Zucker gestattet.

Die gestellte Aufgabe wird erfindungsgemäß mit einem Verfahren gelöst, welches dadurch gekennzeichnet ist, daß Melasse oder Schlempe mit Methanoldampf behandelt wird, wobei das enthaltene Wasser gegen Methanol ausgetauscht wird, und daß die in methanolischer Lösung unlöslichen Substanzen abgetrennt werden.

Die abgetrennten unlöslichen Substanzen — hauptsächlich·anorganische Salze wie Carbonate und Sulfate — können beispielsweise zu Dünge- oder Flußmitteln weiter verarbeitet werden.

Nach einer Ausführungsform des erfindungsgemäßen Verfahrens wird ein Teil der in der Melasse oder Schlempe enthaltenen anorganischen Salze vor der Behandlung mit Methanoldampf durch Ansäuern der Melasse oder Schlempe auf pH-Werte zwischen 2 und 7 und Zusatz von 5 bis 35 Vol.% Methanol ausgefällt und abgetrennt.

Nach einer weiteren Ausführungsform wird der Melasse oder Schlempe vor der Behandlung mit Methanoldampf eine Mineralsäure zugesetzt, vorzugsweise wird dabei die Melasse oder Schlempe durch Zusatz von Schwefelsäure auf einen pH-Wert von 2 bis 6 eingestellt.

Bei der Aufarbeitung von Melasse wird zweckmäßig ein Teil des in der methanolischen Lösung enthaltenen Invertzuckers durch Zusatz von Invertzucker-Impfkristallen und Kühlung der Lösung auskristallisiert, vorteilhaft lassen sich aus der methanolischen Lösung mittels Membranfiltration oder umgekehrter Osmose auch Zuckerprodukte gewinnen, beispielsweise Flüssigzucker, Fructose, Glucose und Invertzucker.

Zur Bereitung einer gereinigten, wässerigen Lösung wird die methanolische Lösung einer Abstreifbehandlung mittels Wasserdampf unterzogen. Geht man von Melasse aus, wird nach dieser Ausgestaltung des erfindungsgemäßen Verfahren eine gereinigte, wässerige Zuckerlösung erhalten, welche direkt zur Vergärung eingesetzt werden kann.

Soll ein vollständig entionisiertes Produkt erhalten werden, wird zweckmäßig eine erhaltene, methanolische oder wässerige Lösung zur Vervollständigung der Entsalzung mit Ionenaustauschern behandelt.

Nach dem erfindungsgemäßen Verfahren ist es somit möglich, Melasse weitestgehend zu reinigen und deren beträchtlichen Zuckergehalt größtenteils zu gewinnen. Erfindungsgemäß gereinigte Melasse kann auch unmittelbar als Substrat für Zitronensäure erzeugende Mikroorganismen dienen. Bei der Alkohol- und Hefegemäßen Verfahren eine wirtschaftlichere Prozeßführung möglich, da infolge der geringeren Anteile an Trockensubstanz mehr Melasse bzw. Schlempe in die Gäranlagen rückgeführt werden kann und die verbleibende Schlempe nicht mehr verworfen werden muß. Die zum Eindampfen anfallende Schlempemenge wird geringer und der Eindampfrückstand kann, vor allem dank seines nur sehr niedrigen Kaliumgehaltes, ohne weitere Behandlung als Futtermittel verabreicht werden oder — wenn kein Bedarf dafür besteht — ohne Verschmutzungsgefahr für die Brenner verbrannt werden.

Eine erfindungsgemäße Anlage ist dadurch gekennzeichnet, daß eine Austauschkolonne vorgesehen ist, in deren oberen Bereich eine Zuleitung für Melasse oder Schlempe und in deren unteren Bereich eine Sammelleitung für Methanoldampf münden, von deren Kopfteil eine Leitung für das anfallende Gemisch von Methanol- und Wasserdampf zu einer Rektifizierkolonne führt und von deren Bodenteil eine Sumpfleitung zu einem Absetzgefäß führt, in welchem sich unlösliche anorganische Substanzen von der methanolischen Lösung trennen, daß das Absetzgefäß über eine Förderleitung für die überstehende methanolische Lösung mit einer Abstreifkolonne verbunden ist, in deren unteren Bereich eine Frischdampfleitung einmündet und an deren Kopfteil eine Leitung für Methanoldampf angeschlossen ist, wobei die Methanoldampf führenden Leitungen von der Abstreifkolonne, von der Rektifizierkolonne und von einem Methanolverdampfer zu der Sammelleitung vereinigbar sind.

Nach einer vorteilhaften Weiterbildung sind zur Gewinnung eines Teiles der Zucker, welche in einer aus Melasse erhaltenen methanolischen Lösung enthalten sind, in die Förderleitung — in Förderrichtung gesehen hintereinander — ein Kristallisator und ein weiterer Absetzbehälter eingebaut.

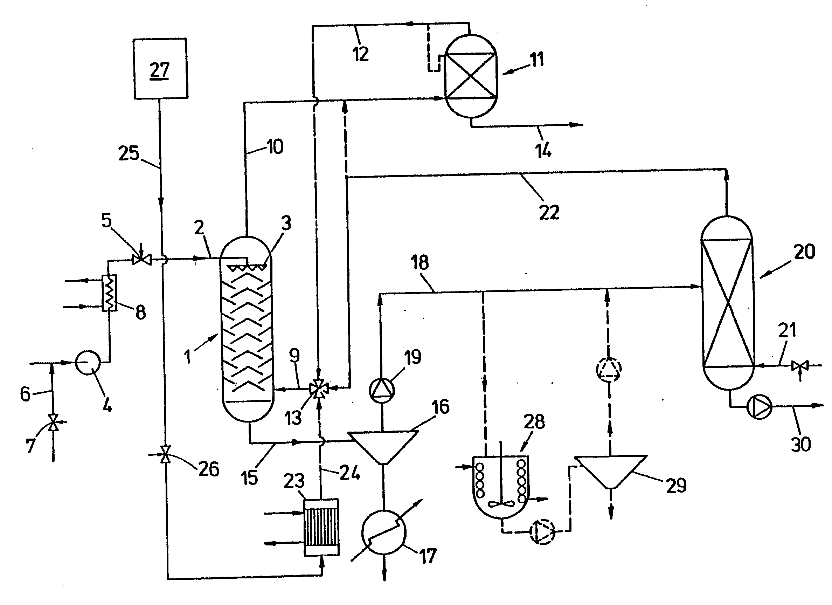

Die Erfindung wird im folgenden anhand der Zeichnung und des Beispieles noch näher erläutert.

In der Zeichnung ist eine Ausführungsform einer erfindungsgemäßen Anlage schematisch veranschaulicht. Eine vorzugsweise mit Kaskaden ausgestattete Austauschkolonne ist allgemein mit 1 bezeichnet. In den oberen Bereich der Austauschkolonne 1 mündet eine Zuleitung 2 für Melasse oder Schlempe in einem in der Austauschkolonne 1 vorgesehenen Sprühkopf 3. In der Zuleitung 2 befindet sich eine Pumpe 4 und ein Regelventil 5 zur Steuerung der Durchflußmenge. Aus der Leitung 6 kann mittels eines weiteren Regelventiles 7 eine Mineralsäure zudosiert werden. Beim Durchströmen des Vorwärmers 8 wird das in der Zuleitung 2 befindliche Gut auf die notwendige Temperatur gebracht.

In den unteren Bereich der Austauschkolonne 1 mündet eine Sammelleitung 9 für Methanoldampf. Im Verlauf des Durchganges durch die Austauschkolonne 1 wird das in der Melasse oder Schlempe enthaltene Wasser durch das in Dampfform entgegenströmende Methanol ersetzt, das resultierende Gemisch von Methanol- und Wasserdampf wird vom Kopfteil der Austauschkolonne 1 durch eine Leitung 10 abgezogen und einer Rektifizierkolonne 11 zugeführt, in welcher das Gemisch wieder scharf getrennt wird. Methanoldampf aus der Rektifizierkolonne 11 gelangt durch die Leitung 12 über ein Mehrwegventil 13 in die Sammelleitung 9; Heißwasser wird in der Leitung 14 abgeführt. Dieses Heißwasser kann u.a. zum Erhitzen der Melasse oder Schlempe im Vorwärmer 8 verwendet werden.

Vom Bodenteil der Austauschkolonne 1 wird eine Suspension von ausgefällten unlöslichen Substanzen in methanolischer Lösung durch eine Sumpfleitung 15 einem Absetzgefäß 16 zugeführt. Die abgesetzten unlöslichen Substanzen — hauptsächlich Salze — werden nach Waschen mit Methanol in einem Trockner 17 behandelt und anschließend beispielsweise zu Düngerstoffen weiter verarbeitet.

Die klare, überstehende methanolische Lösung wird aus dem Absetzgefäß 16 über eine Förderleitung 18 mittels einer Pumpe 19 in eine Abstreifkolonne 20 eingespeist, in deren unteren Bereich eine ein Regelventil enthaltende Frischdampfleitung 21 mündet. Vom Kopfteil der Abstreifkolonne 20 führt eine Leitung 22 für Methanoldampf über das Mehrwegventil 13 zur Sammelleitung 9. Überdies kann eine — strichliert eingezeichnete — Zweigleitung vorgesehen sein, welche die Leitung 22 temporär mit der Leitung 10 verbindet.

Der Bedarf der Austauschkolonne 1 an Methanoldampf wird aus den Leitungen 12 und 22 größtenteils gedeckt. Zum Anfahren der Anlage und zur Sicherstellung einer angepaßten Versorgung in jedem Betriebszustand ist weiters ein Methanolverdampfer 23 vorgesehen, welcher beispielsweise mit dem Heißwasser aus der Leitung 14 beheizt sein kann. Der erzeugte Methanoldampf gelangt über eine Leitung 24 gleichfalls zu dem Mehrwegventil 13 und gegebenenfalls in die Sammelleitung 9. Die Stellung des Mehrwegventils 13 wird in Abhängigkeit von der jeweils benötigten Menge an Methanoldampf geregelt.

Der Methanolverdampfer 23 wird über die Leitung 25 und ein Regelventil 26 mit Methanol aus einem Vorratsgefäß 27 versorgt.

In die Förderleitung 18 zwischen dem Absetzgefäß 16 und der Abstreifkolonne 20 können noch ein Kristallisator 28 und ein weiterer Absetzbehälter 29 eingebaut sein. Die dazu notwendigen zusätzlichen Verbindungsleitungen und Pumpen sind strichliert eingezeichnet.

Bei der Aufarbeitung von Melasse ist es zweckmäßig, den methanolischen Überstand aus dem Absetzbehälter 16 zunächst im Kristallisator 28 zu kühlen und mit Zucker-Impfkristallen zu versetzen, wobei ein Teil der gelösten Zucker auskristallisiert. Die entstandene Kristallsuspension wird in den Absetzbehälter 29 übergeführt und Zucker werden als Sediment gewonnen. Der aus entsalzter, teilentzuckerter methanolischer Melasse bestehende Überstand kann sodann der Abstreifkolonne 20 zugeführt werden, aus der eine gereinigte, vergleichsweise zuckerarme wässerige Melasse durch die Leitung 30 beispielsweise einer Fermentationsstation zugeführt wird.

Die methanolischen Lösungen aus dem Absetzgefäß 16 oder dem Absetzbehälter 29 können jedoch auch mittels Membranfiltration oder durch umgekehrte Osmose zu Zuckerprodukten verarbeitet werden.

Auch die gereinigte, teilentzuckerte wässerige Melasse aus der Leitung 30 kann auf ähnliche Weise zu Zuckerprodukten verarbeitet oder eingedampft werden; wirtschaftlicher ist jedoch die erwähnte direkte Vergärung in einer Fermentationsstation.

Geht man beim erfindungsgemäßen Verfahren von Schlempe aus, erhält man aus der Leitung 30 eine gereinigte wässerige Schlempe, welche vorzugsweise eingedampft und als Futtermittel verwendet wird.

Beispiel:

Eine Rübenmelasse mit folgender Zusammensetzung:

78,7% Trockensubstanz (TS)
0,1% $Ca^{++}$,
4,2% $K^+$
0,9% $Na^+$

wird mit 16 g $H_2SO_4$/kg Melasse auf einen pH-Wert von 4,5 eingestellt und in einer Füllkörperkolonne mit Methanoldampf im Gegenstrom behandelt. Das enthaltene Wasser wird dabei bis auf einen Restwassergehalt von 1 bis 1,5% gegen Methanol ausgetauscht. Die Kationen werden größtenteils als Sulfate ausgefällt, so daß die gereinigte methanolische Melasse nach Abtrennen der unlöslichen Substanzen einen Kationenanteil von nur mehr 0,3 Massen% $K^+$ in der TS aufweist. $Ca^{2\oplus}$-Ionen sind nicht mehr feststellbar.

Durch Kühlung der erhaltenen methanolischen Lösung auf etwa 0°C und Impfen mit Invertzucker können etwa 40% der in der Melasse enthaltenen Zucker als Invertzucker auskristallisiert werden.

**Patentansprüche**

1. Verfahren zur Aufarbeitung von Melasse oder Melasseschlempe, dadurch gekennzeichnet, daß Melasse oder Schlempe mit Methanoldampf behandelt wird, wobei das enthaltene Wasser gegen Methanol ausgetauscht wird, und daß die in methanolischer Lösung unlöslichen Substanzen abgetrennt werden.

2. Verfahren nach Anspruch 1, dadurch gekennzeichnet, daß ein Teil der enthaltenen anorganischen Salze vor der Behandlung mit Methanoldampf durch Ansäuern der Melasse oder Schlempe auf pH-Werte zwischen 2 und 7 und Zusatz von 5 bis 35 Vol.% Methanol ausgefällt und abgetrennt wird.

3. Verfahren nach Anspruch 1, dadurch gekennzeichnet, daß der Melasse oder Schlempe vor der Behandlung mit Methanoldampf eine Mineralsäure zugesetzt wird.

4. Verfahren nach den Ansprüchen 1 und 3, dadurch gekennzeichnet, daß die Melasse oder Schlempe durch Zusatz von Schwefelsäure auf einen pH-Wert von 2 bis 6 eingestellt wird.

5. Verfahren zur Aufarbeitung von Melasse nach einem oder mehreren der Ansprüche 1 bis 4, dadurch gekennzeichnet, daß ein Teil des in der methanolischen Lösung enthaltenen Invertzuckers durch Zusatz von Invertzucker-Impfkristallen und Kühlung der Lösung auskristallisiert wird.

6. Verfahren zur Aufarbeitung von Melasse nach einem oder mehreren der Ansprüche 1 bis 5, dadurch gekennzeichnet, daß aus der methanolischen Lösung mittels Membranfiltration oder umgekehrter Osmose Zuckerprodukte gewonnen werden.

7. Verfahren nach einem oder mehreren der Ansprüche 1 bis 5, dadurch gekennzeichnet, daß die methanolische Lösung zur Bereitung einer gereinigten, wässerigen Lösung einer Abstreifbehandlung mittels Wasserdampf unterzogen wird.

8. Verfahren nach einem oder mehreren der Ansprüche 1 bis 7, dadurch gekennzeichnet, daß eine erhaltene, methanolische oder wässerige Lösung zur Vervollständigung der Entsalzung mit Ionenaustauschern behandelt wird.

9. Anlage zur Durchführung des Verfahrens nach einem oder mehreren der Ansprüche 1 bis 8, dadurch gekennzeichnet, daß eine Austauschkolonne (1) vorgesehen ist, in deren oberen Bereich eine Zuleitung (2) für Melasse oder Schlempe und in deren unteren Bereich eine Sammelleitung (9) für Methanoldampf münden, von deren Kopfteil eine Leitung (10) für das anfallende Gemisch von Methanol- und Wasserdampf zu einer Rektifizierkolonne (11) führt und von deren Bodenteil eine Sumpfleitung (15) zu einem Absetzgefäß (16) führt, in welchem sich unlösliche anorganische Substanzen von der methanolischen Lösung trennen, daß das Absetzgefäß (16) über eine Förderleitung (18) für die überstehende methanolische Lösung mit einer Abstreifkolonne (20) verbunden ist, in deren unteren Bereich eine Frischdampfleitung (21) einmündet und an deren Kopfteil eine Leitung (22) für Methanoldampf angeschlossen ist, wobei die Methanoldampf führenden Leitungen von der Abstreifkolonne (20), von der Rektifizierkolonne (11) und von einem Methanolverdampfer (23) zu der Sammelleitung (9) vereinigbar sind.

10. Anlage nach Anspruch 9, dadurch gekennzeichnet, daß in die Förderleitung (18) — in Förderrichtung gesehen hintereinander — ein Kristallisator (28) und ein weiterer Absetzbehälter (29) eingebaut sind.

**Revendications**

1. Procédé pour le retraitement de la mélasse ou de la vinasse de mélasse, caractérisé en ce que la mélasse ou la vinasse est traitée par de la vapeur de méthanol, l'eau contenue étant échangée contre du méthanol, et en ce que les substances insolubles en solution méthanolique sont séparées.

2. Procédé selon la revendication 1, caractérisé en ce qu'une part des sels inorganiques contenus, avant le traitement par de la vapeur de méthanol, est précipitée et séparée en acidifiant la mélasse ou la vinasse à un pH compris entre 2 and 7 et en ajoutant 5 à 35 pourcent de volume de méthanol.

3. Procédé selon la revendication 1, caractérisé en ce qu'un acide minéral est ajouté à la mélasse ou à la vinasse avant le traitement par du méthanol.

4. Procédé selon les revendications 1 et 3, caractérisé en ce que la mélasse ou la vinasse est ajustée à un pH compris entre 2 et 6 par l'addition de l'acide sulfurique.

5. Procédé pour le retraitement de la mélasse selon l'une ou plusieurs des revendications 1 à 4, caractérisé en ce qu'une part du sucre interverti contenu dans la solution méthanolique est cristallisée par l'addition de germes d'inoculation de sucre interverti et refroidissement de la solution.

6. Procédé pour le retraitement de la mélasse selon l'une ou plusieurs des revendication 1 à 5, caractérisé en ce que des produits de sucre sont obtenus à partir de la solution méthanolique au moyen de filtration à diaphragme ou d'osmose inverse.

7. Procédé selon l'une ou plusieurs des revendications 1 à 5, caractérisé en ce que la solution méthanolique est soumise à un traitement de stripping à la vapeur d'eau pour obtenir une solution aqueuse purifiée.

8. Procédé selon l'une ou plusieurs des revendications 1 à 7, caractérisé en ce qu'une solution obtenue soit méthanolique soit aqueuse est traitée par des échangeurs ioniques pour compléter la déminéralisation.

9. Installation pour la mise en oeuvre du procédé selon l'une ou plusieurs des revendications 1 à 8, caractérisée en ce qu'une colonne échangeuse est prévue, dans la partie supérieure de laquelle une conduite d'amenée (2) pour la mélasse ou vinasse de mélasse et dans la partie inférieure de laquelle une conduite collectrice (9) pour de la vapeur de méthanol entrent, cependant que une conduite (10) pour le mélange formé des vapeurs de méthanol et d'eau amène de la tête de colonne à une colonne de rectification (11) et une conduite pour les produits de bas de colonne (15) amène à un réservoir de déposition (16), dans lequel des substances inorganiques insolubles se séparent de la solution méthanolique, en ce que le réservoir de déposition (16) est rélié à une colonne de stripping (20) par une conduite d'alimentation (18) pour la solution méthanolique surnageante, une conduite de vapeur fraîche (21) entrant dans la partie inférieure de ladite colonne et une conduite (22) pour de la vapeur de méthanol étant réliée à la tête de ladite colonne, les conduits amenant la vapeur de méthanol de la colonne de stripping (20), de la colonne de rectification (11) et d'un évaporateur de méthanol (23) étant susceptible d'être réunies en la conduite collectrice (9).

10. Installation selon la revendication 9, caractérisée en ce qu'un cristallisateur (28) et un réservoir de déposition additionel (29) sont incorporés dans la conduite d'alimentation (18) l'un derrière l'autre — vu dans la direction d'alimentation.

**Claims**

1. A process for working up molasses or molasses vinasses, characterized in that the molasses or vinasses are treated with methanol vapour, the water contained being exchanged for methanol, and that the substances insoluble in a methanolic solution are separated.

2. A process according to claim 1, characterized in that a portion of the inorganic salts contained are precipitated and separated by acidification of the melasses or vinasses to a pH of between 2 and 7 and addition of 5 to 35% by volume of methanol before the treatment with methanol vapour.

3. A process according to claim 1, characterized in that the melasses or vinasses are admixed with a mineral acid before the treatment with methanol vapour.

4. A process according to claims 1 and 3, characterized in that the melasses or vinasses are adjusted to a pH of from 2 to 6 by the addition of sulfuric acid.

5. A process for working up molasses according to one or several of claims 1 to 4, characterized in that a portion of the invert sugar contained in the methanolic solution is crystallized by the addition of invert sugar seed crystals and cooling of the solution.

6. A process for working up molasses according to one or several of claims 1 to 5, characterized in that sugar products are recovered from the methanolic solution by means of membrane filtration or reverse osmosis.

7. A process according to one or several of claims 1 to 5, characterized in that the methanolic solution for preparing a purified aqueous solution is subjected to a stripping treatment by means of water vapour.

8. A process according to one or several of claims 1 to 7, characterized in that a methanolic or aqueous solution obtained is treated with ion exchangers to complete demineralization.

9. A plant for carrying out the process according to one or several of claims 1 to 8, characterized in that an exchange column (1) is provided, in whose upper region a supply duct (2) for molasses or vinasses and in whose lower region a collection duct (9) for methanol vapour enter, from whose top a duct (10) for the mixture of methanol and water vapours incurred leads to a rectification column (11), and from whose bottom a duct (15) for bottom products leads to a settling tank (16) in which insoluble inorganic substances are separated from the methanolic solution, that the settling tank (16) is connected with a stripping column (20) via a feeding duct (18) for the supernatant methanolic solution, into whose lower region a fresh-vapour duct (21) enters and to whose top a duct (22) for methanol vapour is connected, the methanol vapour conducting ducts from the stripping column (20), from the rectification column (11) and from a methanol evaporator (23) being unitable to the collection duct (9).

10. A plant according to claim 9, characterized in that a crystallizer (28) and an additional settling tank (29) are incorporated in the feeding duct (18) one behind the other seen in the feeding direction.

1